# EUROPÄISCHE PATENTANMELDUNG

(11) **EP 2 770 456 A1**
(43) Veröffentlichungstag der Anmeldung: **27.08.2014**
(21) Anmeldenummer: 13156088.0
(22) Anmeldetag: 21.02.2013
(51) Int. Cl.: G06F 21/36, G07F 7/10

(54) **Variable Codetastatur**

(71) Anmelder: GIRA GIERSIEPEN GmbH & Co. KG, 42477 Radevormwald (DE)
(72) Erfinder: Schieffer, Klaus, 51375 Leverkusen (DE); Hellenbroich, Fabian, 50321 Brühl (DE)
(74) Vertreter: Patentanwälte Dr. Solf & Zapf

(57) **Zusammenfassung**

Codetastatur, umfassend eine Eingabeeinheit (1) zur manuellen Eingabe eines Codewortes durch einen Benutzer, mit einem aus mehreren Tasten bestehenden Tastaturfeld mit einer vordefinierten Anordnung von den Tasten zugeordneten Codesymbolen und Funktionssymbolen. Die Eingabeeinheit erfasst nacheinander eine für einen vollständigen Code notwendige Anzahl von Benutzereingaben mittels des Tastaturfelds und setzt die den betätigten Tasten zugeordneten Codesymbole zu einem Benutzercodewort zusammen und vergleicht dieses mit einem abgespeicherten Sicherheitscodewort. Es sind eine Anzeige zur Darstellung der Tasten als graphisches Tastaturfeld, ein Eingabesensor zum Erfassen der Betätigung der graphischen Tasten, eine Auswahleinheit (5) und ein Symbolspeicher (3) vorhanden. In dem Symbolspeicher (3) ist mindestens ein Zeichensatz von Codesymbolen und Funktionssymbolen abgespeichert. Sowohl die Anzeige als auch der Eingabesensor sind in eine der Anzahl von möglichen Codesymbolen und Funktionssymbolen entsprechende Anzahl von Teilbereichen unterteilt. Die Auswahleinheit ordnet die Codesymbole und Funktionssymbole eines Zeichensatzes in einer veränderbaren Reihenfolge den Teilbereichen der Anzeige zu. Die Eingabeeinheit liest den Zeichensatz aus dem Symbolspeicher (3) aus und stellt die Codesymbole und Funktionssymbole in der von der Auswahleinheit (5) bestimmten Reihenfolge in den Teilbereichen der Anzeige dar. Der Eingabesensor erfasst die Betätigungen der Teilbereiche durch den Benutzer und setzt die den betätigten Teilbereichen zugeordneten Codesymbole zu dem Benutzercodewort zusammen.

## Beschreibung

Die vorliegende Erfindung bezieht sich auf eine Codetastatur, umfassend eine Eingabeeinheit zur manuellen Eingabe eines Codewortes durch einen Benutzer, mit einem aus mehreren Tasten bestehenden Tastaturfeld mit einer vordefinierten Anordnung von den Tasten zugeordneten Codesymbolen und Funktionssymbolen, wobei die Eingabeeinheit eine für einen vollständigen Code notwendige Anzahl von Benutzereingaben mittels des Tastaturfelds nacheinander erfasst, und die den betätigten Tasten zugeordneten Codesymbole zu einem Benutzercodewort zusammensetzt und mit einem abgespeicherten Sicherheitscodewort vergleicht.

Derartige Codetastaturen werden insbesondere verwendet, um den Benutzer an einer Tür eines Gebäudes anhand des Codewortes zu authentifizieren und je nach gespeicherten Berechtigungen für den Benutzer die Tür zu öffnen oder andere Funktionen auszuführen, wie zum Beispiel einen Anruf zu tätigen, eine Videoaufzeichnung zu starten oder eine Audioansage abzuspielen. Bei bekannten Codetastaturen besteht das Tastaturfeld aus einer festen Anordnung von Tasten, wie zum Beispiel bei einer elektro-mechanischen Tastatur oder wie bei einem gelaserten Tastaturfeld mit kapazitiven Tasten. Eine derartige Codetastatur hat den Vorteil, dass kein zusätzlicher Gegenstand wie z. B. ein Schlüssel oder eine elektronische oder magnetische Zugangskarte zum Öffnen der Türe verwendet werden muss. Die Codesymbole bestehen in der Regel aus den Ziffern 0 bis 9. Die Anordnung der Codesymbole auf der Anzeige ist fest vorgegeben und entspricht in der Regel der typischen Anordnung der Ziffern bei einem Telefon oder bei einem Geldautomaten. Ein Nachteil dieser Codetastaturen ist es, dass fremde Personen die Eingaben des Benutzers, zum Beispiel mittels eines Teleobjektives oder eines Fernrohres, aus der Ferne unbemerkt beobachten und dadurch Rückschlüsse auf den Sicherheitscode ziehen können. Ein weiterer Nachteil ist, dass fremde Personen durch Abnutzungserscheinungen oder durch Verschmutzungen an der Oberfläche des Tastaturfeldes die häufig benutzten Codesymbole erkennen und damit ebenfalls Rückschlüsse auf den Sicherheitscode treffen können. Um diese Nachteile zu reduzieren, sind Sichtschutzmaßnahmen oder spezielle Oberflächen für Codetastaturen bekannt, die jedoch die oben genannten Nachteile nicht gänzlich verhindern können.

Der Erfindung liegt daher die Aufgabe zugrunde, eine Codetastatur zu schaffen, die es ermöglicht, das Erkennen eines Codewortes durch eine fremde Person während oder nach der Eingabe durch einen Benutzer zu erschweren.

Bei einer Codetastatur der eingangs beschriebenen Art wird die Aufgabe erfindungsgemäß durch eine Anzeige zur Darstellung der Tasten als graphisches Tastaturfeld, einen Eingabesensor zum Erfassen der Betätigung der graphischen Tasten, eine Auswahleinheit und einen Symbolspeicher gelöst, wobei in dem Symbolspeicher mindestens ein Zeichensatz von Codesymbolen und Funktionssymbolen abgespeichert ist, und wobei sowohl die Anzeige als auch der Eingabesensor in eine der Anzahl von möglichen Codesymbolen und Funktionssymbolen entsprechende Anzahl von Teilbereichen unterteilt sind, und wobei die Auswahleinheit die Codesymbole und Funktionssymbole eines Zeichensatzes in einer veränderbaren Reihenfolge den Teilbereichen der Anzeige zuordnet, und wobei die Eingabeeinheit den Zeichensatz aus dem Symbolspeicher ausliest und die Codesymbole und Funktionssymbole in der von der Auswahleinheit bestimmten Reihenfolge in den Teilbereichen der Anzeige darstellt, und wobei der Eingabesensor die Betätigungen der Teilbereiche durch den Benutzer erfasst und die den betätigten Teilbereichen zugeordneten Codesymbole zu dem Benutzercodewort zusammensetzt.

Dadurch wird ein virtuelles graphisches Tastaturfeld erzeugt, bei dem die Reihenfolge der Zuordnung von Codesymbolen zu den Teilbereichen des Tastaturfeldes veränderbar ist, was ein über längere Zeit gleichmäßiges Auftreten von Abnutzungs- oder Verschmutzungserscheinungen an der Anzeige der Eingabeeinheit ermöglicht, so dass von einer fremden Person durch die Abnutzungs- oder Verschmutzungserscheinungen keine zuverlässigen Rückschlüsse auf den eingegebenen Code gezogen werden können. Außerdem wird ein Ablesen der Eingabe des Benutzers durch Beobachten des Benutzers aus einer weiten Distanz erschwert, da fremde Personen nur schwer erkennen können, welche Reihenfolge von Codesymbolen auf der Anzeige angezeigt wird.

In einer weiteren Ausbildung der Erfindung bestimmt die Auswahleinheit die Reihenfolge der Zuordnung von Codesymbolen und Funktionssymbolen zu den Teilbereichen mittels eines Zufallsgenerators zufällig. Dies hat den Vorteil, dass die verwendete Reihenfolge der Zuordnung von Codesymbolen zu den Teilbereichen nicht vorhersehbar ist und somit beim Beobachten durch eine fremde Person noch schwieriger erkannt werden kann.

In einer Ausführungsform der Erfindung bestimmt die Auswahleinheit eine Reihenfolge für die Zuordnung von Codesymbolen und Funktionssymbolen zu den Teilbereichen der Eingabeeinheit nach jeder Erfassung einer Benutzereingabe neu, wobei die Eingabeeinheit die neu bestimmte Reihenfolge für die Erfassung der nächsten Benutzereingabe verwendet. Dies hat den Vorteil, dass sich das Tastaturfeld bezüglich der Anordnung der Codesymbole auf der Anzeige besonders häufig verändern kann. Der Benutzer passt seine Betätigungen an das jeweilig angezeigte Tastaturfeld an. Dadurch wird ein Beobachten der Eingabe des Benutzercodes durch eine fremde Person zusätzlich erschwert.

In einer alternativen Ausführungsform der Erfindung bestimmt die Auswahleinheit eine Reihenfolge für die Zuordnung von Codesymbolen und Funktionssymbolen zu den Teilbereichen der Eingabeeinheit nach der Erfassung der Benutzereingaben eines vollständigen Benutzercodewortes neu, wobei die Eingabeeinheit die neu bestimmte Reihenfolge für die Erfassung der Benutzereingaben für das nächste Benutzercodewort verwendet. Da sich bei dieser Ausführungsform die Anordnung der Codesymbole während einer für den Benutzer logisch zusammengehörigen Eingabe von Codesymbolen eines Benutzercodewortes nicht ändert, wird eine fehlerfreie Eingabe durch den Benutzer erleichtert. Der Benutzer muss seine Betätigungen nur nach der Eingabe eines vollständigen Codewortes und nicht nach jedem Codesymbol an eine neue Anordnung der Codesymbole auf der Anzeige anpassen.

In einer zusätzlichen Ausgestaltung der Erfindung sind in dem Symbolspeicher mehrere verschiedene Zeichensätze von Codesymbolen und Funktionssymbolen abgespeichert, wobei die Eingabeeinheit für die Erfassung der Benutzereingaben für das nächste Benutzercodewort einen Zeichensatz auswählt. Dies ermöglicht zum Beispiel verschiedene Zeichensätze für verschiedene Personen zu verwenden. So kann zum Beispiel anstatt der Ziffern 0 bis 9 ein Zeichensatz mit Bildern von Tieren für die Codeeingabe durch Kinder verwendet werden. Außerdem kann der gleiche Zeichensatz mehrmals mit unterschiedlichen Reihenfolgen der Codesymbole und Funktionssymbole im Symbolspeicher abgespeichert sein, so dass die Anordnung der Codesymbole und Funktionssymbole auf dem Tastaturfeld auch durch eine Auswahl von verschiedenen Zeichensätzen aus dem Symbolspeicher möglich ist.

Zur weiteren Ausgestaltung der Erfindung bestimmt die Auswahleinheit die Reihenfolge der Zuordnung von Codesymbolen und Funktionssymbolen zu den Teilbereichen derart, dass die Funktionssymbole bei jeder Reihenfolge immer denselben Teilbereichen zugeordnet werden. Somit werden die den Funktionssymbolen zugeordneten Teilbereiche als nicht veränderbare Teilbereiche von der Auswahleinheit behandelt. Dies erleichtert die Bedienung der Codetastatur,, wie zum Beispiel das Löschen des Codesymbols der letzten Benutzereingabe oder das Bestätigen des Endes eines Benutzercodewortes einer Benutzereingabe.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können. Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: ein Ablaufdiagramm der Codeeingabe einer ersten Ausführungsform einer erfindungsgemäßen variablen Codetastatur,
- Fig. 2: ein Ablaufdiagramm der Codeeingabe einer zweiten Ausführungsform einer erfindungsgemäßen variablen Codetastatur,
- Fig. 3: eine tabellarische Darstellung eines erfindungsgemäßen Symbolspeichers mit einer ersten Reihenfolge,
- Fig. 4: eine Skizze einer Zuordnung von Teilbereichen eines Tastaturfeldes gemäß dem Symbolspeicher nach Fig. 3,
- Fig. 5: eine tabellarische Darstellung eines erfindungsgemäßen Symbolspeichers mit einer zweiten Reihenfolge,
- Fig. 6: eine Skizze einer Zuordnung von Teilbereichen eines Tastaturfieldes gemäß dem Symbolspeicher nach Fig. 5.

In den verschiedenen Figuren der Zeichnung sind gleiche Teile stets mit denselben Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

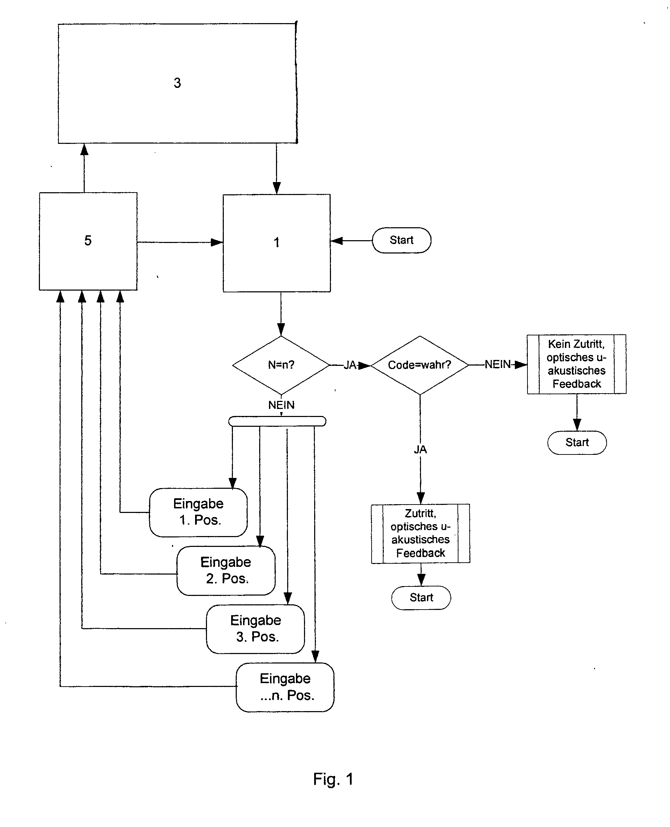

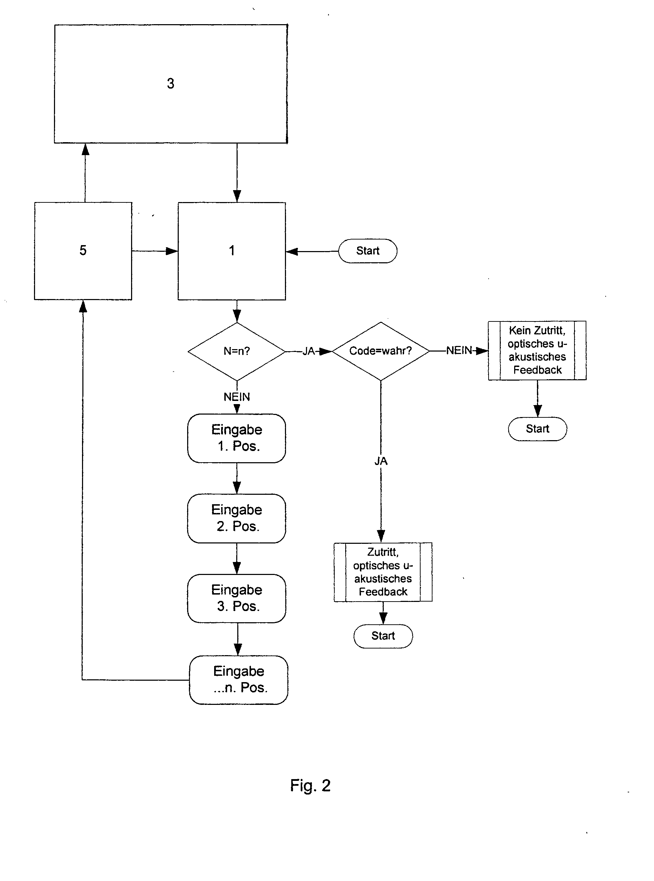

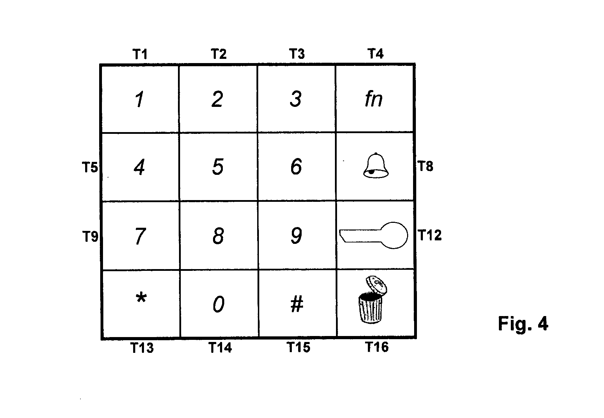

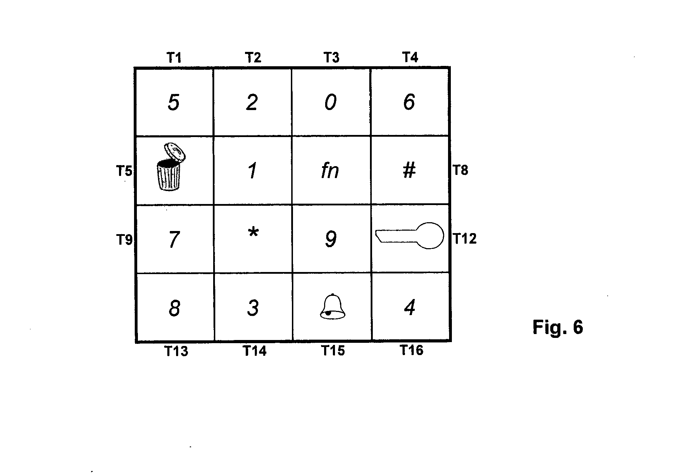

Gemäß Fig. 1 und Fig. 2 umfasst eine erfindungsgemäße Codetastatur eine Eingabeeinheit 1 zur manuellen Eingabe eines aus mehreren N Stellen von Codesymbolen bestehenden Codewortes und bestimmten Bedienfunktionen durch einen Benutzer, einen Symbolspeicher 3 und eine Auswahleinheit 5. Die Bedienfunktionen können zum Beispiel Klingelfunktionen, Türöffnungsfunktionen, Funktionen zur Löschung der letzten Eingabe oder Funktionen zur Bestätigung des Endes einer Eingabe sein. Die Eingabeeinheit 1 umfasst eine insbesondere als LCD- oder LED-Display ausgebildete Anzeige zur Darstellung von Tasten als ein graphisches Tastaturfeld 7 (gemäß Fig. 4 und Fig. 6) und einen insbesondere als Touchscreen ausgebildeten Eingabesensor zum Erfassen der Betätigung der graphischen Tasten. Die Eingabeeinheit 1 und die Auswahleinheit 5 umfassen insbesondere einen Mikrocontroller oder Mikroprozessor zur Steuerung der Funktionen der jeweiligen Einheit. Die Eingabeeinheit 1 und die Auswahleinheit 5 können auch denselben Mikrocontroller oder Mikroprozessor umfassen, so dass der Mikrocontroller oder der Mikroprozessor beide Einheiten steuert. In dem Symbolspeicher 3 ist mindestens ein Zeichensatz von Codesymbolen und Funktionssymbolen abgespeichert. In Weiterbildungen der Erfindung können auch mehrere unterschiedliche Zeichensätze von Codesymbolen und Funktionssymbolen in dem Symbolspeicher 3 gespeichert sein, wobei auf jeden Zeichensatz über eine individuelle Adresse im Symbolspeicher 3 zugegriffen werden kann. Alternativ ist es auch möglich, dass in dem Symbolspeicher 3 der gleiche Zeichensatz mehrfach mit unterschiedlichen Reihenfolgen der Codesymbole und/oder Funktionssymbole abgespeichert ist. Sowohl die Anzeige als auch der Eingabesensor sind in eine der Anzahl von möglichen Codesymbolen und Funktionssymbolen entsprechende Anzahl von Teilbereichen T1 bis T16 unterteilt, wobei jeder Teilbereich T1 bis T16 einer graphischen Taste entspricht.

Die Auswahleinheit 5 ordnet die Codesymbole und Funktionssymbole eines ausgewählten Zeichensatzes in einer veränderbaren Reihenfolge den Teilbereichen T1 bis T16 der Eingabeeinheit 1 zu. Dazu wählt die Auswahleinheit 5 die Reihenfolge der Zuordnung von Codesymbolen und Funktionssymbolen zu den Teilbereichen T1 bis T16 mittels einer programmierbaren Sequenz von vordefinierten Reihenfolgen aus. Alternativ bestimmt die Auswahleinheit 5 die Reihenfolge der Zuordnung von Codesymbolen und Funktionssymbolen zu den Teilbereichen T1 bis T16 mittels eines Zufallsgenerators zufällig. Die ausgewählte Reihenfolge wird von der Auswahleinheit 5 entweder in dem Symbolspeicher 3 abgespeichert oder wird direkt an die Eingabeeinheit 1 übertragen.

In einer weiteren Ausbildung der Erfindung bestimmt die Auswahleinheit 5 die Reihenfolge der Zuordnung von Codesymbolen und Funktionssymbolen zu den Teilbereichen (T1 bis T16) derart, dass die Funktionssymbole bei jeder Reihenfolge immer denselben Teilbereichen (T1 bis T16) zugeordnet werden. Damit wird nur die Anordnung der Codesymbole auf dem Tastaturfeld 7 verändert. Die Anordnung der Funktionssymbole bleibt immer gleich, so dass der Benutzer die Funktionssymbole immer schnell findet, was die Bedienung vereinfacht.

Die Eingabeeinheit 1 liest den Zeichensatz von Codesymbolen und Funktionssymbolen aus dem Symbolspeicher 3 aus und stellt die Codesymbole in der von der Auswahleinheit 5 bestimmten Reihenfolge in den Teilbereichen T1 bis T16 der Anzeige bzw. des Tastaturfeldes 7 dar, wobei in jedem Teilbereich T1 bis T16 genau ein Codesymbol oder Funktionssymbol dargestellt ist. Die Eingabeeinheit 1 erfasst mittels des Eingabesensors die Betätigungen der Teilbereiche T1 bis T16 durch den Benutzer und setzt die den nacheinander betätigten Teilbereichen T1 bis T16 zugeordneten Codesymbole zu dem Benutzercodewort zusammen oder führt die einem Funktionssymbol zugeordnete Bedienfunktion aus. Das Ende der Eingabe eines Benutzercodewortes wird entweder nach Eingabe der N-ten Stelle des Codewortes von der Eingabeeinheit 1 festgestellt (wie in Fig. 1 und Fig. 2 gezeigt) oder wird anhand der Betätigung eines Funktionssymbols, welches das Ende der Eingabe durch den Benutzer kennzeichnet, erfasst. Nach jeder erfassten Benutzereingabe überprüft die Eingabeeinheit 1, ob eine Anzahl von Codestellen für ein vollständiges Codewort eingegeben wurde. Falls nein, erfasst die Eingabeeinheit 1 die nächste Codestelle, falls ja, überprüft die Eingabeeinheit 1 die Richtigkeit des Benutzercodewortes. Dazu vergleicht die Eingabeeinheit 1 das Benutzercodewort mit einem gespeicherten Sicherheitscodewort. Je nach dem Ergebnis des Vergleichs erzeugt die Eingabeeinheit 1 ein entsprechendes optisches und/oder akustisches Feedback und die entsprechende Funktion, zum Beispiel das Öffnen eines Verriegelungsmechanismus für den Zutritt, wird eingeleitet. Danach wird die Eingabe des nächsten Codewortes bearbeitet.

In einer ersten Ausführungsform der Erfindung gemäß Fig. 1 bestimmt die Auswahleinheit 5 eine Reihenfolge für die Zuordnung von Codesymbolen und Funktionssymbolen zu den Teilbereichen T1 bis T16 der Eingabeeinheit 1 nach jeder Erfassung einer Benutzereingabe eines Codesymbols neu. Dabei verwendet die Eingabeeinheit 1 die neu bestimmte Reihenfolge für die Erfassung der Benutzereingabe für das nächste Codesymbol bzw. die nächste Bedienfunktion. Somit kann sich bei der Eingabe eines Codewortes nach jeder weiteren Eingabe die Anordnung der Codesymbole und Funktionssymbole auf der Anzeige bzw. dem Tastaturfeld 7 ändern. Die oben beschriebene Ausführungsform hat den Vorteil, dass die verwendeten Anordnungen von Codesymbolen besonders häufig ausgetauscht werden, wodurch ein Ablesen der Eingabe des Codes durch eine fremde Person zusätzlich erschwert wird.

In einer zweiten Ausführungsform der Erfindung gemäß Fig. 2 bestimmt die Auswahleinheit 5 eine Reihenfolge für die Zuordnung von Codesymbolen und Funktionssymbolen zu den Teilbereichen T1 bis T16 der Eingabeeinheit 1 nach der Erfassung der Benutzereingaben eines vollständigen Benutzercodewortes neu. Dabei verwendet die Eingabeeinheit 1 die neu bestimmte Reihenfolge für die Erfassung der Benutzereingaben für das nächste Benutzercodewort. Somit ändert sich die Anordnung der Codesymbole und Funktionssymbole auf der Anzeige immer nur nach einer Eingabe eines vollständigen Benutzercodewortes. Dies hat den Vorteil, dass der Benutzer sich bei der Eingabe eines Codewortes nicht an verändernde Anordnungen von Codesymbolen und Funktionssymbolen gedanklich anpassen muss und er somit weniger Eingabefehler macht.

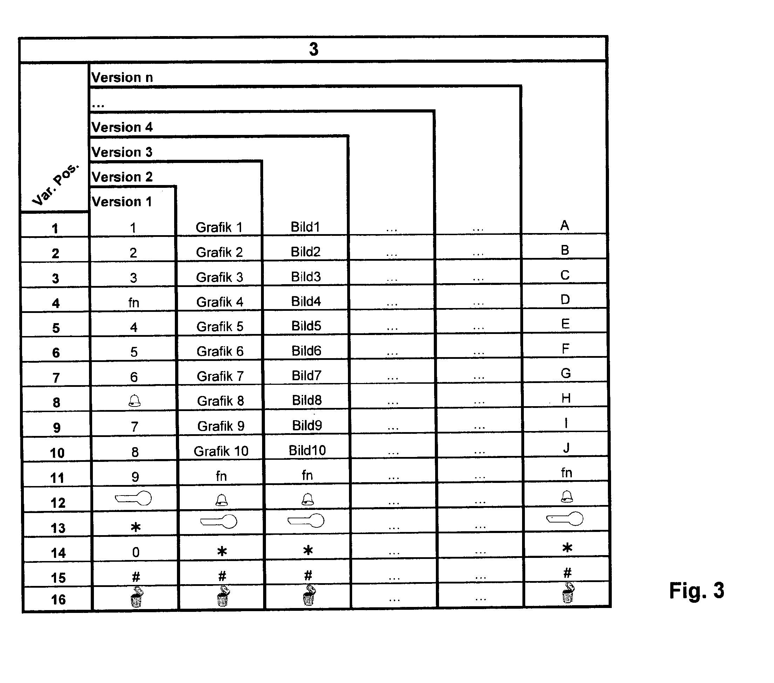

In Fig. 3 ist eine Ausführungsform eines erfindungsgemäßen Symbolspeichers 3 in tabellarischer Darstellung gezeigt. Der Symbolspeicher 3 weist mehrere unterschiedliche Zeichensätze von Codesymbolen und Funktionssymbolen auf. Jeder Zeichensatz ist individuell adressierbar. Die Eingabeeinheit wählt zu Beginn einer Eingabe eines Codewortes einen Zeichensatz aus. Bei der gezeigten Ausführungsform besteht jeder Zeichensatz aus 10 Codesymbolen und 6 Funktionssymbolen. Diese Anzahl und Aufteilung ist prinzipiell beliebig und lediglich von der zur Verfügung gestellten Sicherheit, den zur Verfügung gestellten Funktionen und der Größe der Anzeige der Eingabeeinheit 1 abhängig. Insbesondere stellen Zeichensätze von 12 bis 16 Zeichen für Codetastaturen eine akzeptable Sicherheit zur Verfügung. Der erste Zeichensatz Version 1 besteht aus den Ziffern 0 bis 9 als Codesymbole und dem Kürzel fn und den Zeichen "Glocke", "Schlüssel", "Mülleimer", * und # als Funktionssymbole. Der zweite Zeichensatz Version 2 besteht aus 10 beliebigen geometrischen Figuren Graphic 1 bis Graphic 10 als Codesymbole und dem Kürzel fn und den Zeichen "Glocke", "Schlüssel", "Mülleimer", * und # als Funktionssymbole. Der dritte Zeichensatz Version 3 besteht aus 10 beliebigen abgespeicherten Bildern Image 1 bis Image 10 als Codesymbole und dem Kürzel fn und den Zeichen "Glocke", "Schlüssel", "Mülleimer", * und # als Funktionssymbole. Der letzte Zeichensatz Version n besteht aus den Buchstaben A bis J als Codesymbole, und dem Kürzel fn und den Zeichen "Glocke", "Schlüssel", "Mülleimer", * und # als Funktionssymbole. Diese Zeichensätze sind beispielhaft und können durch beliebige andere Zeichensätze ausgetauscht werden, wobei auch die Anzahl der Codesymbole im Verhältnis zu der Anzahl der Funktionssymbole variieren kann.

Im Symbolspeicher 3 ist die Reihenfolge für die Zuordnung der Codesymbole und Funktionssymbole zu den Teilbereichen T1 bis T16 einer Eingabeeinheit 1 mit 16 Teilbereichen gespeichert (Tabelle erste Zeile "Var. Pos"), wobei eine linear aufsteigende Reihenfolge von 1 bis 16 ausgewählt ist. Fig. 4 zeigt eine Zuordnung der Teilbereiche T1 bis T16 der Anzeige basierend auf dem Symbolspeicher 3 gemäß Fig. 3 und der dort gespeicherten Reihenfolge und dem Zeichensatz Version 1.

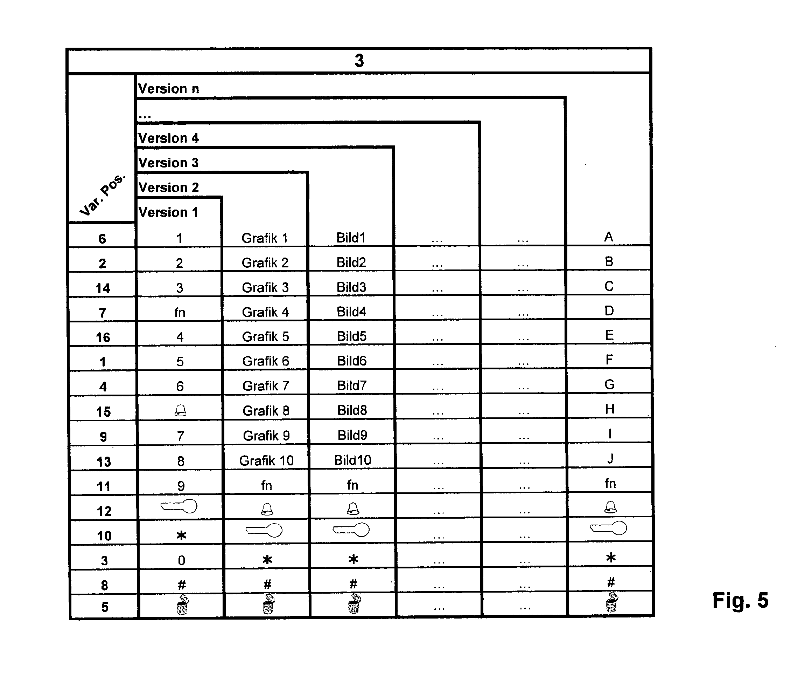

In Fig. 5 ist der Symbolspeicher 3 nach der Veränderung der Reihenfolge der Zuordnung durch die Auswahleinheit 5 dargestellt. Die lineare Reihenfolge 1 bis 16 der Teilbereiche T1 bis T16 wurde in eine zufällige Reihenfolge T6, T2, T14, T7, T16, T1, T4, T15, T9, T13, T11, T12, T10, T3, T8, T5 geändert. Fig. 6 zeigt eine Zuordnung der Teilbereiche T1 bis T16 der Anzeige basierend auf dem Symbolspeicher gemäß Fig. 5 und der dort gespeicherten Reihenfolge und dem Zeichensatz Version 1.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Codetastatur, umfassend eine Eingabeeinheit (1) zur manuellen Eingabe eines Codewortes durch einen Benutzer, mit einem aus mehreren Tasten bestehenden Tastaturfeld (7) mit einer vordefinierten Anordnung von den Tasten zugeordneten Codesymbolen und Funktionssymbolen, wobei die Eingabeeinheit eine für einen vollständigen Code notwendige Anzahl von Benutzereingaben mittels des Tastaturfelds (7) nacheinander erfasst, und die den betätigten Tasten zugeordneten Codesymbole zu einem Benutzercodewort zusammensetzt und mit einem abgespeicherten Sicherheitscodewort vergleicht,
**gekennzeichnet durch**
eine Anzeige zur Darstellung der Tasten als graphisches Tastaturfeld (7), einen Eingabesensor zum Erfassen der Betätigung der graphischen Tasten, eine Auswahleinheit (5) und einen Symbolspeicher (3), wobei in dem Symbolspeicher (3) mindestens ein Zeichensatz von Codesymbolen und Funktionssymbolen abgespeichert ist, und wobei sowohl die Anzeige als auch der Eingabesensor in eine der Anzahl von möglichen Codesymbolen und Funktionssymbolen entsprechende Anzahl von Teilbereichen (T1 bis T16) unterteilt sind, und wobei die Auswahleinheit die Codesymbole und Funktionssymbole eines Zeichensatzes in einer veränderbaren Reihenfolge den Teilbereichen (T1 bis T16) der Anzeige zuordnet, und wobei die Eingabeeinheit den Zeichensatz aus dem Symbolspeicher (3) ausliest und die Codesymbole und Funktionssymbole in der von der Auswahleinheit (5) bestimmten Reihenfolge in den Teilbereichen (T1 bis T16) der Anzeige darstellt, und wobei der Eingabesensor die Betätigungen der Teilbereiche (T1 bis T16) **durch** den Benutzer erfasst und die den betätigten Teilbereichen (T1 bis T16) zugeordneten Codesymbole zu dem Benutzercodewort zusammensetzt.

2. Codetastatur nach Anspruch 1,
**dadurch gekennzeichnet, dass**
die Auswahleinheit (5) die Reihenfolge der Zuordnung von Codesymbolen und Funktionssymbolen zu den Teilbereichen (T1 bis T16) mittels einer programmierbaren Sequenz von vordefinierten Reihenfolgen auswählt.

3. Codetastatur nach Anspruch 1,
**dadurch gekennzeichnet, dass**
die Auswahleinheit (5) die Reihenfolge der Zuordnung von Codesymbolen und Funktionssymbolen zu den Teilbereichen (T1 bis T16) mittels eines Zufallsgenerators zufällig bestimmt.

4. Codetastatur nach einem der Ansprüche 1 bis 3,
**dadurch gekennzeichnet, dass**
die Auswahleinheit (5) eine Reihenfolge für die Zuordnung von Codesymbolen und Funktionssymbolen zu den Teilbereichen (T1 bis T16) der Eingabeeinheit (1) nach jeder Erfassung einer Benutzereingabe neu bestimmt, wobei die Eingabeeinheit (1) die neu bestimmte Reihenfolge für die Erfassung der nächsten Benutzereingabe verwendet.

5. Codetastatur nach einem der Ansprüche 1 bis 3,
**dadurch gekennzeichnet, dass**
die Auswahleinheit (5) eine Reihenfolge für die Zuordnung von Codesymbolen und Funktionssymbolen zu den Teilbereichen (T1 bis T16) der Eingabeeinheit (1) nach der Erfassung der Benutzereingaben eines vollständigen Benutzercodewortes neu bestimmt, wobei die Eingabeeinheit (1) die neu bestimmte Reihenfolge für die Erfassung der Benutzereingaben für das nächste Benutzercodewort verwendet.

6. Codetastatur nach einem der Ansprüche 1 bis 5,
**dadurch gekennzeichnet, dass**
in dem Symbolspeicher (3) mehrere verschiedene Zeichensätze von Codesymbolen und Funktionssymbolen abgespeichert sind, wobei die Eingabeeinheit (1) für die Erfassung der Benutzereingaben für das nächste Benutzercodewort einen Zeichensatz auswählt.

7. Codetastatur nach einem der Ansprüche 1 bis 5,
**dadurch gekennzeichnet, dass**
die Auswahleinheit (5) die Reihenfolge der Zuordnung von Codesymbolen und Funktionssymbolen zu den Teilbereichen (T1 bis T16) derart bestimmt, dass die Funktionssymbole bei jeder Reihenfolge immer denselben Teilbereichen (T1 bis T16) zugeordnet werden.
